# EUROPEAN PATENT APPLICATION

(11) **EP 2 506 510 A1**
(43) Date of publication of application: **03.10.2012**
(21) Application number: 12161140.4
(22) Date of filing: 23.03.2012
(51) Int. Cl.: H04L 12/56

(54) **Centralized traffic shaping for data networks**

(30) Priority: 28.03.2011 US 201113073269
(71) Applicant: Honeywell International Inc., NJ 07962-2245 (US); TTTech Computertechnik AG, 1040 Wien (AT)
(72) Inventor: Hall, Brendan, Morristown, NJ New Jersey 07962-2245 (US); Varadarajan, Srivatsan, Morristown, NJ New Jersey 07962-2245 (US); Steiner, Wilfried, A-1040 Vienna (AT); Bauer, Guenther, A-1040 Vienna (AT)
(74) Representative: Buckley, Guy Julian

(57) **Abstract**

A communication system comprises a plurality of nodes and a switch having a plurality of ports, each port coupled to one of the plurality of nodes. At least one of the plurality of nodes is configured to transmit a first unregulated flow of frames associated with a first virtual link to a first port of the plurality of ports of the switch. The switch is configured to regulate the first unregulated flow of frames by buffering frames of the first unregulated flow in a first input queue associated with the first virtual link, applying traffic shaping parameters associated with the first virtual link to the frames in the first input queue associated with the first virtual link, and outputting the first regulated flow of frames to one or more output queues associated with one or more output ports based on the first virtual link.

## Description

### CROSS-REFERENCE TO RELATED APPLICATIONS

This application is related to the following co-pending United States patent applications, all of which are hereby incorporated herein by reference:

United States patent application serial number 13/073,260 (attorney docket number H0028046-5409) entitled "VERSATILE SOURCE PORT ENFORCEMENT FOR DATA NETWORKS" filed on even date herewith and which is referred to herein as the '046 application; and'

United States patent application serial number 13/217,823 (attorney docket number H0028048-5409) entitled "EMBEDDED END-TO-END DELAY INFORMATION FOR DATA NETWORKS" filed on even date herewith and which is referred to herein as the '048 application.

### BACKGROUND

In a conventional system implementing the Aeronautical Radio, Incorporated (ARINC) standard 664 part 7, end systems or nodes shape output traffic to ensure a minimum distance between any two frames of the same virtual link is maintained at the output of the shaping function. The shaped traffic flows of all output virtual links at the node will then be merged into a common flow at the Ethernet ports of the end system by a scheduler.

### SUMMARY

In one embodiment, a communication system is provided. The communication system comprises a plurality of nodes and a switch having a plurality of ports, each port coupled to one of the plurality of nodes. At least one of the plurality of nodes is configured to transmit a first unregulated flow of frames associated with a first virtual link to a first port of the plurality of ports of the switch. The switch is configured to regulate the first unregulated flow of frames by buffering frames of the first unregulated flow in a first input queue associated with the first virtual link, applying traffic shaping parameters associated with the first virtual link to the frames in the first input queue associated with the first virtual link, and outputting the first regulated flow of frames to one or more output queues associated with one or more output ports based on the first virtual link.

### DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a block diagram of an exemplary embodiment of a communication system.

Figure 2 is a block diagram of an exemplary embodiment of a switch.

Figure 3 is a block diagram of another exemplary embodiment of a switch.

Figure 4 is flow chart of an exemplary embodiment of a method of centralized traffic shaping.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual acts may be performed. The following detailed description is, therefore, not to be taken in a limiting sense.

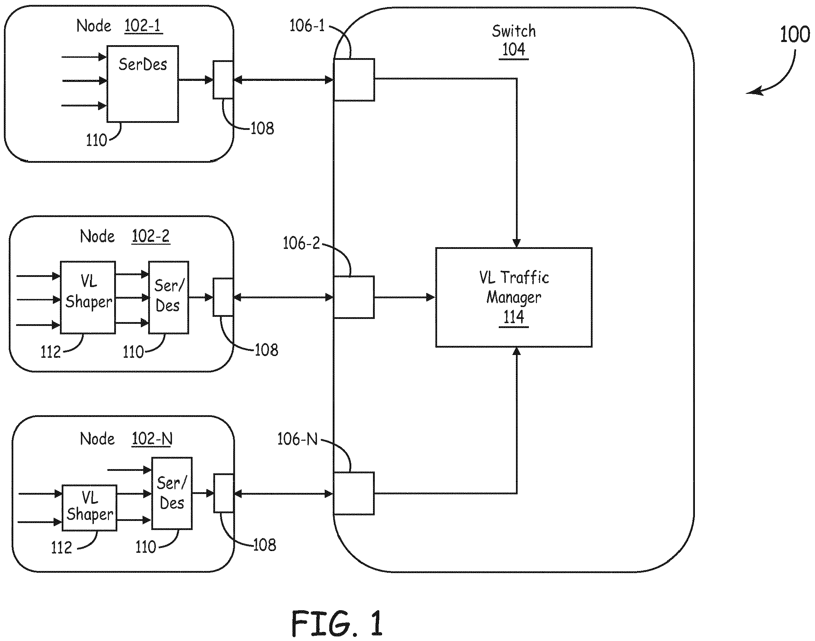

Figure 1 is a block diagram of one embodiment of a communication system 100. Communication system 100 includes a plurality of nodes 102-1 ... 102-N (also referred to as end systems) and at least one switch 104. Communication system 100 is configured to use virtual links to communicate frames between nodes 102-1 ... 102-N via the switch 104. As used herein, a virtual link is a unidirectional logic path connecting two or more nodes 102 via the switch 104. For example, in some embodiments, communication system 100 is a full duplex switched Ethernet network configured to implement a protocol compatible with the Aeronautical Radio, Incorporated (ARINC) standard 664 part 7 (also referred to as Avionics Full-Duplex Switched Ethernet (AFDX)). In some embodiments, a virtual link is restricted to have one and only one source node 102 as defined in the ARINC standard 664 part 7. However, in other embodiments, the switch 104 is configured to accept a plurality of nodes 102 as valid source nodes for a single virtual link as described in the '046 application.

Each node 102 is configured as a source node for at least one virtual link. For purposes of explanation only, each node 102 is configured as a source node for three virtual links in the exemplary embodiment shown in Figure 1. Each virtual link is configured with a bandwidth allocation gap (BAG). The BAG is the minimal distance between any two frames of the same virtual link transmitted from a node.

Node 102-2 includes a virtual link (VL) shaper 112 that is configured to check the frames of each virtual link for compliance with the corresponding BAG as in a conventional ARINC 664 part 7 end system. In particular, if the frames of a given virtual link are output from a host computer (not shown) faster than the corresponding BAG, the VL shaper 112 buffers the frames and regulates the output flow such that the frames comply with the respective BAG. If the frames of a given host computer are output slower than the respective BAG, the VL Shaper 112 allows the frames to be output immediately with a maximum technology latency specified by the protocol. The VL shaping function of the VL shaper 112 can be implemented in software that is executed by a processing unit.

The regulated flows of frames are input to a Serializer/Deserializer (SerDes) 110. The SerDes 110 schedules and multiplexes the regulated flows into a single regulated flow of frames that are output via port 108 to the port 106-2 of the switch 104. The VL traffic manager 114 in the switch 104 checks the regulated flow of frames by comparing them to a list of all virtual links eligible for the port 106-2 and the respective timing parameters of the regulated frames. If the regulated flows of frames pass the checker function, they are routed to an output queue of the output ports associated with the respective virtual link.

Unlike node 102-2, node 102-1 does not regulate the flow of frames for the plurality of virtual links. Instead, node 102-1 multiplexes the unregulated flows of frames into a single unregulated flow of frames. For example, the SerDes 110 is configured to output the frames on a first-come, first-served basis in some embodiments. In other embodiments, the SerDes 110 outputs the frames based on different policies, such as priority-based queuing. However, the SerDes does not regulate the flow of frames for compliance with the respective BAG. The unregulated flow of frames is output via port 108 of node 102-1 to port 106-1 of switch 104. When an unregulated flow of frames is received at the switch, the VL traffic manager 114 is configured to regulate the flow of frames, as described in more detail below.

The VL traffic manager 114 also schedules and outputs the flows regulated in the switch to the output queue of the output ports associated with the respective virtual link. Thus, the shaping and scheduling functions which are typically performed in the nodes 102 are off-loaded from node 102-1 to the switch. In some embodiments, the number of frames stored or buffered in each output queue is configured on a per-queue basis. In other words, the number of frames buffered in each queue is configured independently of the other queues. In addition, in some embodiments, each queue is configured on a per-queue basis to manage frames in the respective queue by replacing the oldest frame in the queue with a newly received frame when the queue is full. In other embodiments, each queue is configured on a per-queue basis to manage frames in the respective queue by dropping the newly received frame if the queue is full. Thus, each queue can be configured to manage the frames in the respective queue independent of the other queues. Each queue is also configured on a per-queue basis to output frames from the respective queue on a first-in first-out basis or on a priority-based scheme. The priority information is obtained, in some embodiments, based on information, such as the virtual link ID, obtained from the frames of the respective flow of frames.

In addition, the shaping and scheduling functions are performed in hardware of the switch 104, in some embodiments, using components known to one of skill in the art, such as, but not limited to, one or more logic gates (i.e. AND, OR, NOT, etc.), and one or more buffers. In other embodiments, the shaping and scheduling functions are implemented with a processing unit that functions with software programs, firmware or other computer readable instructions for carrying out various methods, process tasks, calculations, and control functions, used in the in the scheduling and shaping functions.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

Node 102-N also includes a VL shaper 112 similar to node 102-2. The VL shaper 112 of node 102-N operates to regulate flows of virtual links similar to the VL shaper 112 of node 102-2. However, node 102-N is configured to regulate only a subset of the unregulated flows of frames for a plurality of virtual links. Thus, at least one unregulated flow of frames is multiplexed with the regulated flows of frames in the SerDes 110 of node 102-2. The mixed flow of frames is output via port 108 of node 102-2 to port 106-N of the switch 104. The VL traffic manager 114 separates the regulated flows from the unregulated flows. The VL traffic manager 114 performs only the checker function described above on the regulated flows of frames. However, the VL traffic manager 114 regulates and schedules the unregulated flow of frames. The regulated flows and unregulated flow are then output to the output queue of the respective output ports associated with the virtual links.

Thus, the switch 104 in Figure 1 is configured on a per-virtual link basis to apply shaping (regulating) and scheduling functions to flows of frames received over the ports 106-1 ... 106-N. In other words, the traffic shaping is applied to the frames received on a subset of the switch ports rather than to the frames received on all the ports 106-1 ... 106-N. In addition, for a specific port 106, the shaping and scheduling can be selectively applied to a subset of the flows received over the respective port 106.

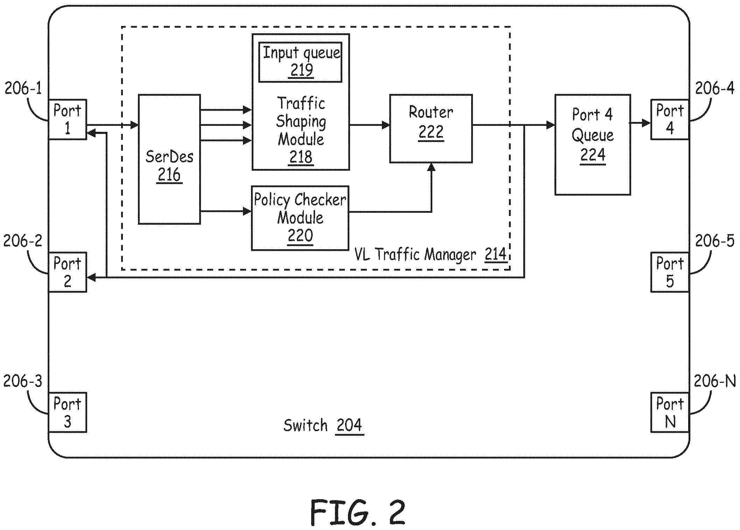

Figure 2 is a block diagram of one embodiment of a switch 204. The switch 204 includes ports 206-1 ... 206-N (also labeled as ports 1 - N). Switch 204 also includes a virtual link (VL) traffic manager 214. The VL traffic manager 214 includes a serializer/deserializer (SerDes) 216, a traffic shaping module 218, a policy checker module 220 and a router 222. For purposes of explanation only, the VL traffic manager 214 is depicted as being coupled to port 206-1 only. However, it is to be understood that ports 206-2 ... 206-N are also coupled to the VL traffic manager 214. In addition, in some embodiments, the functionality of the VL traffic manager 214 is replicated for each of the plurality of ports 206 rather than coupling each port 206 to a single VL traffic manager 214.

The SerDes 216 receives the multiplexed flows of frames transmitted from a node coupled to port 206-1. The SerDes 216 separates the flows into individual flows of frames. If the multiplexed flow of frames includes a regulated flow, the regulated flow is passed from the SerDes 216 to the policy checker module 220. For example, the switch 204 is configured, in some embodiments, with a list of virtual links which are regulated at the source node and a list of virtual links which require flow regulation at the switch 104. By comparing a virtual link ID contained in the frames, the switch 104 identifies the regulated flows and the unregulated flows. The policy checker module 220 determines if the virtual link of the regulated flow is a valid virtual link for the port over which the flow of frames was received. In addition, the policy checker module 220 enforces traffic policing in some embodiments. For example, the policy checker module 220 is configured, in some embodiments, to prevent the frames of a given virtual link from exceeding the respective BAG for the virtual link. If the regulated flow passes the checker function, the policy checker module 220 outputs the regulated flow to the router 222.

The unregulated flows of each virtual link are output from the SerDes 216 to the traffic shaping module 218. The traffic shaping module 218 includes an input queue 219 for the corresponding unregulated flows of each virtual link. Hence, although only one input queue 219 is shown in this example for purposes of explanation, it is to be understood that more than one input queue 219 can be used in other embodiments.

The traffic shaping module 218 ensures that the frames of each virtual link comply with the corresponding BAG. In particular, if the frames of a given virtual link are closer than the corresponding BAG permits, the traffic shaping module 218 buffers the frames in the corresponding input queue 219 and regulates the output flow such that the frames comply with the respective BAG. For example, in some embodiments, the input queue 219 is configured to manage frames in the input queue 219 by replacing the oldest frame in the queue with a newly received frame when the queue is full. In other embodiments, the input queue is configured to manage frames in the respective queue by dropping the newly received frame if the queue is full. In addition, the number of frames to be buffered in the corresponding input queue 219 is determined on a per-queue basis.

If the frames of a given virtual link are sufficiently separate and, thus, comply with the respective BAG for the virtual link, the traffic shaping module 218 outputs the frames immediately with a maximum technology latency specified by the protocol. The traffic shaping module 218 outputs the regulated flow of frames for each virtual link to the router 222.

The router 222 is configured to route the regulated flows of frames to the corresponding output port 206 for the respective virtual link. For example, as shown in Figure 2, a frame of a virtual link can be routed to one or more output ports 206 including the same port over which the frame was received. In particular, the frames for each virtual link are placed in an output queue 224 of the corresponding output ports for the respective virtual link. Although only the output queue 224 for port 206-4 is shown, for purposes of explanation, it is to be understood that each port 206 is associated with a port queue..

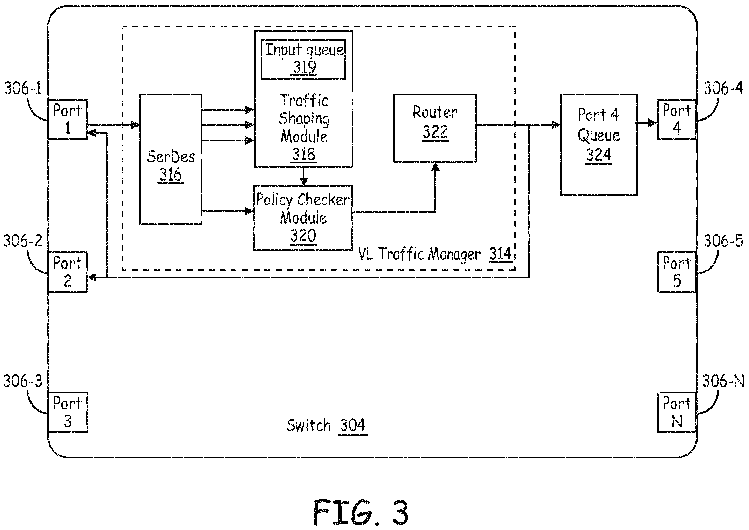

Figure 3 is a block diagram of another exemplary embodiment of a switch 304. Similar to switch 204, switch 304 includes a virtual link (VL) traffic manager 314. The VL traffic manager 314 includes a serializer/deserializer (SerDes) 316, a traffic shaping module 318, a policy checker module 320 and a router 322. Each of the components of the VL traffic manager 314 function as described above with respect to VL traffic manager 214 in Figure 2. However, in the embodiment shown in Figure 3, the traffic shaping module 318 is configured to output the regulated flow of frames for each virtual link to the policy checker module 320 rather than directly to the router 322. Hence, in this exemplary embodiment, the policy checker module 320 checks the regulated flows from the traffic shaping module 318 for compliance with the traffic policy and verifies that each virtual link is a valid virtual link for the port over which they were received. If the regulated flows pass the traffic policy check, the flows are passed on to the router 322 to be routed as described above.

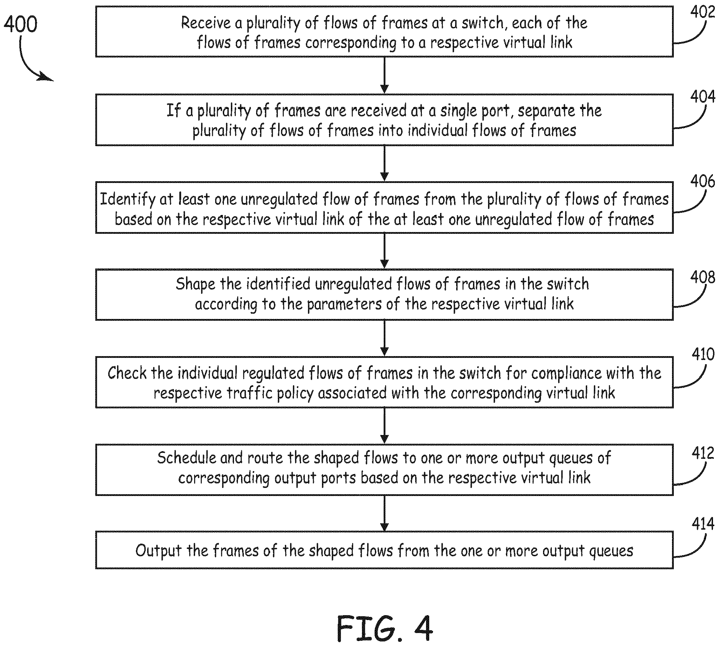

Figure 4 is a flow chart depicting one embodiment of a method 400 of centralized traffic shaping. Method 400 can be implemented in a switch such as switch 104, 204, or 304 described above. At 402, a plurality of flows of frames, each corresponding to a respective virtual link, is received at a switch. As used herein an "unregulated flow of frames" or "unregulated flow" is defined to mean a flow of frames transmitted from a node without traffic shaping being applied to the frames.
In other words, the node does not regulate or control the timing, spacing, bandwidth etc. of the various frames corresponding to the respective virtual link. Hence, a "regulated flow of frames" is a flow to which a traffic shaping policy has been applied.

In some embodiments, a single unregulated flow of frames is received at each port in the switch. However, in other embodiments a combination of a plurality of unregulated flows is received at a single port in the switch. In yet other embodiments, a combination of regulated flows together with the unregulated flow of frames is received at one or more ports.

At 404, if more than one flow of frames is received at a single port, the flows are separated into individual flows as described above. At 406, at least one unregulated flow of frames from the plurality of flows of frames is identified based on the respective virtual link of the at least one unregulated flow of frames.

At 408, the identified unregulated flows of frames are buffered and shaped in the switch according to the parameters of the respective virtual link. For example, each virtual link can be assigned a different BAG. Hence, each individual unregulated flow is shaped to comply with the respective BAG. In addition, in some embodiments, the switch is configured to shape the individual flows in hardware. Additionally, in some embodiments, the number of frames of the shaped flows of frames to be buffered in one or more input queues is determined on a per-queue basis as described above

At 410, the individual regulated flows of frames are checked in the switch for compliance with the respective traffic policy associated with the corresponding virtual link. For example, if a regulated flow of frames is received at the port together with an unregulated flow, the regulated flow is checked for compliance with the respective traffic policy as described above. In addition, in some embodiments, the individual flows that are shaped in the switch are also checked for compliance with the respective traffic policies. Additionally, checking for compliance with the traffic policies also includes determining if the flows of frames were received at a valid port for the virtual link associated with the respective flow of frames.

At 412, the shaped flows are scheduled and routed to one or more output queues of corresponding output ports based on the respective virtual link. For example, the regulated flows can be output to the same input port over which they were received, to a different output port or to a plurality of output ports. It is to be understood that each received flow of frames can be output to different output ports depending on the virtual link associated with each flow of frames.

At 414, the frames of the shaped flows are output from the one or more output queues. In some embodiments, the frames of the shaped flows of frames from the one or more output queues are output based on a first-in first-out policy. In other embodiments, the frames are output based on a priority ranking. The priority ranking can be obtained, in some embodiments, from data in the frames of the shaped flows.

### EXAMPLE EMBODIMENTS

Example 1 includes a communication system comprising a plurality of nodes; and a switch having a plurality of ports, each port coupled to one of the plurality of nodes; wherein at least one of the plurality of nodes is configured to transmit a first unregulated flow of frames associated with a first virtual link to a first port of the plurality of ports of the switch; and wherein the switch is configured to regulate the first unregulated flow of frames by buffering frames of the first unregulated flow in a first input queue associated with the first virtual link, applying traffic shaping parameters associated with the first virtual link to the frames in the first input queue associated with the first virtual link, and outputting the first regulated flow of frames to one or more output queues associated with one or more output ports based on the first virtual link.

Example 2 includes the communication system of Example 1, wherein the at least one node is further configured to transmit a second regulated flow of frames associated with a second virtual link to the first port of the switch, wherein the switch is configured to check that the first port is a valid source port for the second virtual link and to pass the second regulated flow of frames to one or more output queues if the first port is a valid source port for the second virtual link.

Example 3 includes the communication system of any of Examples 1-2, wherein the switch and the plurality of nodes are configured to implement a protocol compatible with ARINC 664 part 7.

Example 4 includes the communication system of any of Examples 1-3, wherein the one or more output queues are configured to buffer one or more frames of the first regulated flow of frames associated with the first virtual link.

Example 5 includes the communication system of any of Examples 1-4, wherein the first input queue is configured to manage frames in the first input queue when the first input queue is full by replacing an oldest frame in the first input queue with a newly received frame or dropping newly received frames.

Example 6 includes the communication system of any of Examples 1-5, wherein the switch is configured to output frames from each of the one or more output queues based on one of a first-in first-out basis or a priority basis.

Example 7 includes the communication system of Example 6, wherein the switch is configured to derive priority information from information in the frames of the first regulated flow of frames.

Example 8 includes a switch in a communication system, the switch comprising a plurality of ports, each port coupled to a respective node and configured to receive from the respective node at least one flow of frames associated with a respective virtual link, wherein the at least one flow of frames from one of the nodes is an unregulated flow of frames; a traffic shaping module coupled to the plurality of ports, wherein the traffic shaping module has at least one input queue, each input queue associated with a respective virtual link; wherein the traffic shaping module is configured to buffer frames of each virtual link in the respective input queue and to apply traffic shaping parameters to the frames in the respective input queue based on the respective virtual link; a plurality of output queues, at least one output queue associated with each virtual link; and a router configured to provide the flow of frames shaped by the traffic shaping module to one or more of the plurality of output queues based on the respective virtual link of the flow of frames shaped by the traffic shaping module.

Example 9 includes the switch of Example 8, wherein the switch is configured to implement a protocol compatible with ARINC 664 part 7.

Example 10 includes the switch of any of Examples 8-9, wherein the switch configures the number of frames of the flow of frames shaped by the traffic shaping module to be buffered in the respective input queues on a per-queue basis.

Example 11 includes the switch of any of Examples 8-10, wherein the switch is configured to output frames from each of the one or more output queues based on one of a first-in first-out basis or a priority basis.

Example 12 includes the switch of any of Examples 8-11, wherein the switch is configured to determine the order in which to output frames from each of the one or more output queues based on information obtained from the respective flow of frames.

Example 13 includes the switch of any of Examples 8-12, further comprising a deserializer configured to separate individual flows of frames received over the same port; and a policy checker module configured to check if each received flow of frames is received on a valid port for the respective virtual link associated with each flow of frames.

Example 14 includes a method of centralized traffic shaping, the method comprising receiving a plurality of flows of frames at a switch, each of the flows of frames corresponding to a respective virtual link; identifying at least one unregulated flow of frames from the plurality of flows of frames based on the respective virtual link of the at least one unregulated flow of frames; shaping the at least one identified unregulated flow of frames in the switch based on traffic shaping parameters associated with the respective virtual link of the unregulated flow of frames; and routing the shaped flow of frames to one or more output queues based on the respective virtual link.

Example 15 includes the method of Example 14, wherein shaping the at least one identified unregulated flow of frames in the switch comprises shaping the at least one identified unregulated flow of frames in hardware of the switch.

Example 16 includes the method of any of Examples 14-15, wherein receiving a plurality of flows of frames comprises receiving a plurality of flows of frames as a combined flow of frames at a single port, the method further comprising separating the plurality of flows of frames from the combined flow of frames into individual flows of frames.

Example 17 includes the method of any of Examples 14-16, further comprising identifying at least one regulated flow of frames from the plurality of flows of frames based on the respective virtual link of the at least one regulated flow of frames; and checking the at least one identified regulated flow of frames to determine if the at least one identified regulated flow of frames is received on a valid port for the respective virtual link.

Example 18 includes the method of any of Examples 14-17, further comprising determining the number of frames of the shaped flow of frames to be buffered in each of one or more input queues on a per-queue basis.

Example 19 includes the method of any of Examples 14-18, further comprising outputting the frames of the shaped flow of frames from the one or more output queues based on one of a first-in first-out basis or a priority basis.

Example 20 includes the method of Example 19, further comprising determining an order in which to output frames from the one or more output queues based on information obtained from the frames in the shaped flow of frames.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A switch (204) in a communication system, the switch comprising:
a plurality of ports (206), each port coupled to a respective node and configured to receive from the respective node at least one flow of frames associated with a respective virtual link, wherein the at least one flow of frames from one of the nodes is an unregulated flow of frames;
a traffic shaping module (218) coupled to the plurality of ports, wherein the traffic shaping module has at least one input queue (219), each input queue associated with a respective virtual link;
wherein the traffic shaping module is configured to buffer frames of each virtual link in the respective input queue and to apply traffic shaping parameters to the frames in the respective input queue based on the respective virtual link;
a plurality of output queues (224), at least one output queue associated with each virtual link; and
a router (222) configured to provide the flow of frames shaped by the traffic shaping module to one or more of the plurality of output queues based on the respective virtual link of the flow of frames shaped by the traffic shaping module.

2. The switch of claim 1, wherein the switch configures the number of frames of the flow of frames shaped by the traffic shaping module to be buffered in the respective input queues on a per-queue basis.

3. The switch of claim 1, wherein the switch is configured to output frames from each of the one or more output queues based on one of a first-in first-out basis or a priority basis.

4. The switch of claim 1, wherein the switch is configured to determine the order in which to output frames from each of the one or more output queues based on information obtained from the respective flow of frames.

5. The switch of claim 1, further comprising:
a deserializer (216) configured to separate individual flows of frames received over the same port; and
a policy checker module (220) configured to check if each received flow of frames is received on a valid port for the respective virtual link associated with each flow of frames.

6. A method (400) of centralized traffic shaping, the method comprising:
receiving a plurality of flows of frames at a switch, each of the flows of frames corresponding to a respective virtual link (402);
identifying at least one unregulated flow of frames from the plurality of flows of frames based on the respective virtual link of the at least one unregulated flow of frames (406);
shaping the at least one identified unregulated flow of frames in the switch based on traffic shaping parameters associated with the respective virtual link of the unregulated flow of frames (408); and
routing the shaped flow of frames to one or more output queues based on the respective virtual link (412).

7. The method of claim 6, wherein receiving a plurality of flows of frames comprises receiving a plurality of flows of frames as a combined flow of frames at a single port, the method further comprising separating the plurality of flows of frames from the combined flow of frames into individual flows of frames (404).

8. The method of claim 6, further comprising:
identifying at least one regulated flow of frames from the plurality of flows of frames based on the respective virtual link of the at least one regulated flow of frames (410); and
checking the at least one identified regulated flow of frames to determine if the at least one identified regulated flow of frames is received on a valid port for the respective virtual link (410).

9. The method of claim 6, further comprising determining the number of frames of the shaped flow of frames to be buffered in each of one or more input queues on a per-queue basis (408).

10. The method of claim 6, further comprising outputting the frames of the shaped flow of frames from the one or more output queues based on one of a first-in first-out basis or a priority basis (414).
